# EUROPEAN PATENT SPECIFICATION

(11) **EP 2 388 451 B1**
(45) Date of publication and mention of the grant of the patent: **05.03.2014**
(21) Application number: 09838278.1
(22) Date of filing: 13.01.2009
(51) Int. Cl.: F01N 3/08, F01N 3/36, F01N 3/20, F01N 13/02, F01N 3/10

(54) **EXHAUST PURIFICATION APPARATUS FOR INTERNAL COMBUSTION ENGINE**
ABGASREINIGUNGSVORRICHTUNG FÜR EINEN VERBRENNUNGSMOTOR
DISPOSITIF DE NETTOYAGE D'ÉCHAPPEMENT POUR MOTEUR À COMBUSTION INTERNE

(43) Date of publication of application: 23.11.2011
(73) Proprietor: TOYOTA JIDOSHA KABUSHIKI KAISHA, Toyota-shi, Aichi-ken, 471-8571 (JP)
(72) Inventor: HIROTA, Shinya, Toyota-shi Aichi-ken 471-8571 (JP); HOSHI, Sakutaro, Toyota-shi Aichi-ken 471-8571 (JP); SASATANI, Toru, Toyota-shi Aichi-ken 471-8571 (JP); FUJIMOTO, Hiroshi, Toyota-shi Aichi-ken 471-8571 (JP)
(74) Representative: Kuhnen & Wacker
(86) International application number: PCT/JP2009/050331
(87) International publication number: WO 2010/082308

(56) References cited:
- WO-A1-2007/022926
- WO-A1-2007/022926
- WO-A1-2008/111254
- JP-A- 2003 176 711
- JP-A- 2006 132 393
- JP-A- 2008 163 861
- US-A1- 2006 021 331
- US-A1- 2008 264 042

## Description

### TECHNICAL FIELD

The present invention relates to an exhaust purification apparatus for an internal combustion engine, and in particular, to an exhaust purification apparatus for an internal combustion engine which includes a heating gas generation device suitable for heating an exhaust gas purification catalyst such as an NOx catalyst.

### BACKGROUND ART

As is known, in an internal combustion engine such as a diesel engine in which combustion takes place in an excessive oxygen (lean) state, exhaust temperature is lower than that in a gasoline engine in which combustion takes place in a stoichiometric state. Disadvantageously, because of the low exhaust temperature, an exhaust gas purification catalyst such as an NOx catalyst installed in an exhaust passage is difficult to activate. In particular, in an internal combustion engine mounted in a vehicle, the exhaust gas purification catalyst may be installed away from a combustion chamber in the internal combustion engine or under the floor of the vehicle where the catalyst is subjected to an air stream. Thus, disadvantageously, the exhaust gas purification catalyst is difficult to become hot and difficult to activate. Furthermore, there has been a demand to activate the exhaust gas purification catalyst early when the internal combustion engine is cold-started.

As a measure against the above-described problem, an apparatus is disclosed in JP 2008-163861 A. The apparatus includes a first catalyst and a second catalyst both provided in an exhaust passage on an upstream side of the exhaust gas purification catalyst and having an oxidation function, and a fuel addition valve configured to add fuel to the first catalyst. The added fuel is sequentially combusted in the first and second catalysts. Hot exhaust gas thus generated is then supplied to the exhaust gas purification catalyst to heat the exhaust gas purification catalyst.

On the other hand, as an exhaust gas purification catalyst, a selective reduction NOx catalyst (what is called a urea SCR) is known which is configured to continuously reduce NOx in the exhaust gas using an aqueous solution of urea as a reducing agent. In an exhaust purification apparatus using the selective reduction NOx catalyst, the aqueous water of urea is evaporated by exhaust heat or catalyst heat and hydrolyzed into ammonia. The ammonia and NOx react with each other in the catalysts to reduce the NOx for purification.

However, in general, the aqueous solution of urea is fed to an inlet portion of the NOx catalyst and is evaporated and hydrolyzed at the position of the inlet portion. Thus, the exhaust gas flowing into the NOx catalyst is low in temperature, making efficient evaporation and hydrolyzation of the aqueous solution of urea difficult. Hence, efficient generation of ammonia has been difficult.
[005a] Further exhaust purification apparatuses for internal combustion engines are disclosed by WO 2007/022926 A1 and US 2006/021331 A1.

The present invention has been developed in view of the above-described circumstances. An object of the present invention is to provide an exhaust purification apparatus for an internal combustion engine which includes a selective reduction NOx catalyst using an aqueous solution of urea as a reducing agent, the apparatus promoting evaporation and hydrolyzation of the aqueous solution of urea and thus generation of ammonia. This object is solved by the Further exhaust purification apparatus for an internal combustion engine according to claim 1.

(cancelled)

### DISCLOSURE OF THE INVENTION

An aspect of the preset invention provides an exhaust purification apparatus for an internal combustion engine, comprising:
a heating gas generation device configured to generate heating gas utilizing a part of exhaust gas flowing through an exhaust passage in the internal combustion engine, the heating gas generation device comprising a number of catalysts with an oxidation function and arranged in series so as to form multiple stages and a fuel supply nozzle configured to supply fuel to the foremost catalyst; and
a selective reduction NOx catalyst provided downstream of the heating gas generation device; wherein the exhaust purification apparatus further comprises:
an aqueous-solution-of-urea supply nozzle configured to supply an aqueous solution of urea to between the catalyst and the NOx catalyst; and
a storage chamber provided in an outlet portion of the rearmost catalyst so that the heating gas discharged from the catalyst is temporarily stored in the storage chamber and then discharged, the storage chamber being supplied with the aqueous solution of urea from the aqueous-solution-of-urea supply nozzle and defined by a defining member that is arranged coaxially with the rearmost catalyst, wherein a rear end of the defining member is closed by a closure plate located opposite a rear end surface of the rearmost catalyst, and wherein the supply nozzle is directed so that the aqueous solution of urea impinges on the closure plate of the defining member; and
a distribution member provided between the catalysts adjacent to each other in a front-rear direction to distribute gas discharged from the front catalyst.

According to this aspect, the heating gas discharged from the catalyst is temporarily stored in the storage chamber and then discharged. Thus, the inside of the storage chamber is hot as a result of the heat of the heating gas. When the storage chamber in this state is supplied with the aqueous solution of urea, the heat in the storage chamber promotes evaporation and hydrolyzation of the aqueous solution of water. This allows ammonia in gas form, that is, ammonia gas to be efficiently generated. The ammonia gas is then discharged from the storage chamber together with the heating gas. Hence, the present invention can promote evaporation and hydrolyzation of the aqueous solution of urea and thus generation of ammonia.

(cancelled)

Preferably, the defining member comprises a plurality of outlets configured to discharge the gas in the storage chamber in a plurality of directions.

Thus, the heating gas and ammonia gas in the storage chamber can be discharged from the plurality of outlets so as to be distributed in the plurality of directions. After being discharged from the storage chamber, the heating gas and the ammonia gas, which are gaseous matter, are diffused and introduced evenly into the NOx catalyst. This allows the NOx purification performance and heating effect of the NOx catalyst to be improved.

Preferably, heat received from the heating gas is stored in the defining member.

Preferably, the defining member is connected to a casing of the rearmost catalyst so that heat transmitted from the casing is stored in the defining member.

Thus, the heat and the high temperature state in the storage chamber can be suitably held. This allows the evaporation and hydrolyzation of the aqueous solution of urea and the generation of ammonia to be further promoted.

Preferably, the aqueous-solution-of-urea supply nozzle is directed so that the aqueous solution of urea fed from the aqueous-solution-of-urea supply nozzle impinges on the defining member.

Thus, the heat of the defining member itself can also be effectively utilized to further promote the evaporation and hydrolyzation of the aqueous solution of urea and the generation of ammonia.

Preferably, the defining member if formed of a cylindrical member projecting rearward from the rearmost catalyst and closed at a rear end thereof by the closure plate.

(cancelled)

(cancelled)

Preferably, the exhaust purification apparatus for the internal combustion engine further comprises a heater provided in an inlet portion of the foremost catalyst.

The present invention provides an exhaust purification apparatus for an internal combustion engine which includes a selective reduction NOx catalyst using an aqueous solution of urea as a reducing agent, the apparatus being very effective for promoting evaporation and hydrolyzation of the aqueous solution of urea and thus generation of ammonia.

### BRIEF DESCRIPTION OF THE DRAWINGS

[Fig. 1] Fig. 1 is a schematic cross-sectional view of a preferred embodiment of the present invention; and
[Fig. 2] Fig. 2 is a schematic cross-sectional diagram illustrating operation of the preferred embodiment.

### BEST MODE FOR CARRYING OUT THE INVENTION

A preferred embodiment of the present invention will be described below with reference to the accompanying drawings.

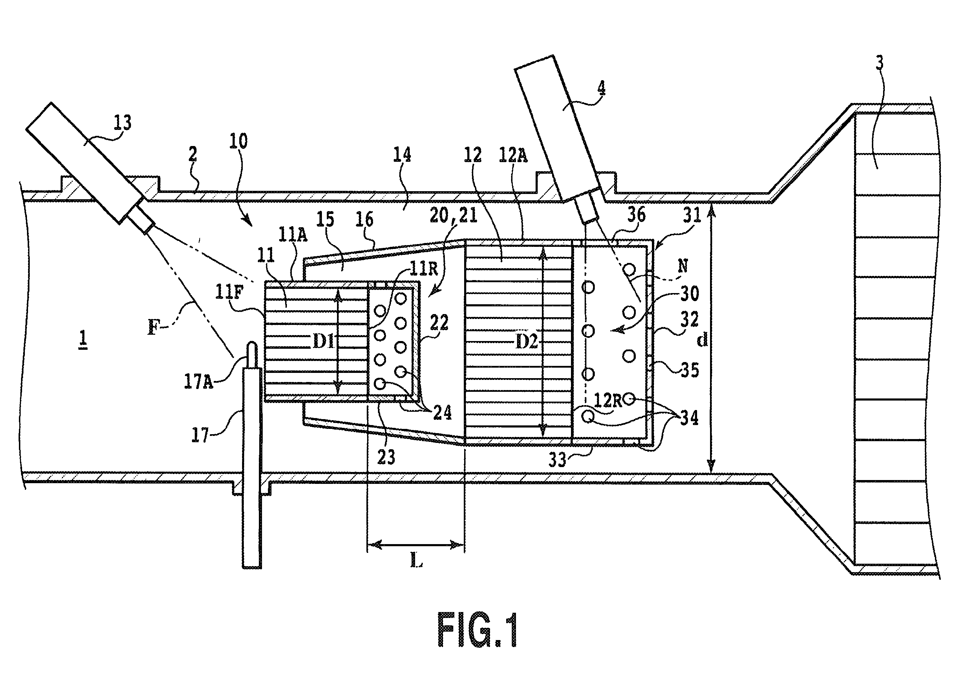

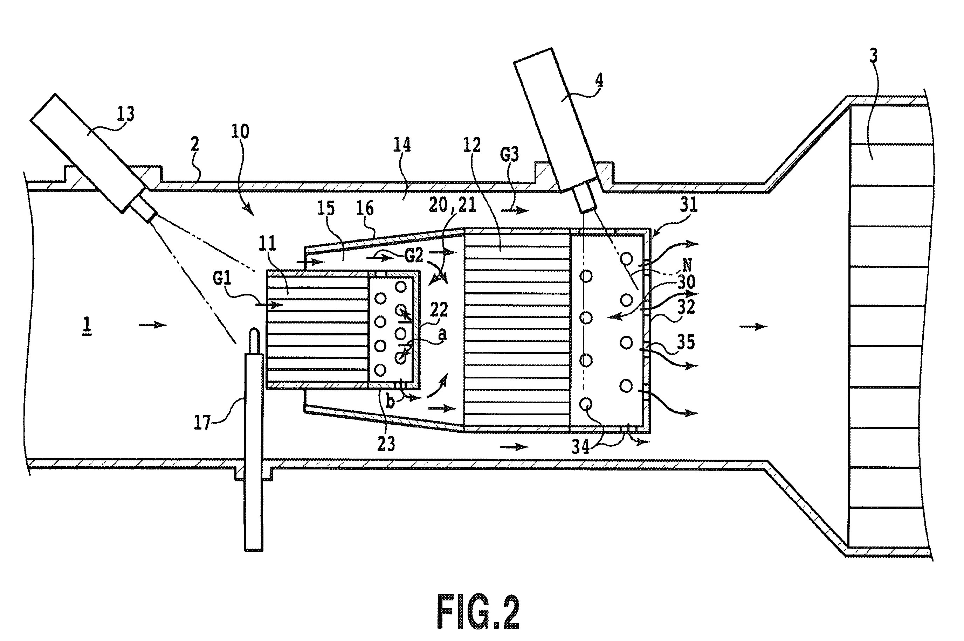

An example will be described below in which the present invention is applied to a vehicle diesel engine. Fig. 1 shows an exhaust purification apparatus for an internal combustion engine according to the present embodiment. Exhaust gas flows from left to right in Fig. 1 (see Fig. 2). An upstream side in the direction of flow of exhaust gas is hereinafter also referred to as a "forward side". A downstream side in the direction of flow of exhaust gas is hereinafter also referred to as a "rearward side".

An exhaust passage 1 is defined by an exhaust pipe 2 and includes an upstream end that is in communication with an exhaust port of an engine main body (not shown in the drawings). An NOx catalyst 3 is provided in the exhaust passage 1 to purify all of the exhaust gas flowing through the exhaust passage 1 to remove NOx from the exhaust gas.

The NOx catalyst 3 is of a selective catalytic reduction (SCR) type. The NOx catalyst 3 receives a reducing agent formed of an aqueous solution of urea and continuously reduces and removes NOx from the exhaust gas. Examples of the NOx catalyst 3 include rare metal such as Pt carried on a surface of a base such as zeolite or alumina, ion-exchanged transition metal such as Cu or Fe carried on the surface of the base, and a titania/vanadium catalyst (V₂O₅/MO₃/TiO₂) carried on the surface of the base. The NOx catalyst 3 has a catalyst temperature within an active temperature range thereof and can reduce NOx while an aqueous solution of urea is being supplied or added to the NOx catalyst 3. When added to the NOx catalyst, an aqueous solution of urea is evaporated and hydrolyzed into ammonia, which then reacts with NOx in the NOx catalyst to reduce NOx. The reaction can be expressed by a chemical formula as follows.

NO + NO₂ + 2NH₃ → 2N₂ + 3H₂O

A aqueous-solution-of-urea supply nozzle 4 is provided upstream of the NOx catalyst 3 to supply an aqueous solution of urea. The aqueous-solution-of-urea supply nozzle 4 is connected to and controlled by an electronic control unit (hereinafter referred to as the ECU). A supplied aqueous solution of urea N is shown by a phantom line.

As described above, the diesel engine according to the present embodiment has a relatively low exhaust temperature and thus tends to have difficulty activating the NOx catalyst 3. Furthermore, in a vehicle engine, the NOx catalyst 3 may be installed away from a combustion engine or under the floor of the vehicle where the NOx catalyst 3 is subjected to an air stream. Thus, the NOx catalyst 3 is difficult to activate. Moreover, there has been a demand to activate the NOx catalyst 3 early when the internal combustion engine is cold-started.

Hence, in order to activate the NOx catalyst 3 early after the engine is started and to keep the NOx catalyst 3 active, a heating gas generation device 10 is provided upstream of the NOx catalyst 3; the heating gas generation device 10 generates heating gas utilizing a part of the exhaust gas flowing through the exhaust passage 1. The provision of the heating gas generation device 10 allows the heating gas generated by the heating gas generation device 10 to be supplied to the NOx catalyst 3, which is thus heated by the heating gas. This allows early activation of the NOx catalyst 3 and maintenance of the active state thereof to be promoted.

The heating gas generation device includes a catalyst with an oxidation function and a fuel supply nozzle configured to supply fuel to the catalyst. The heating gas generation device allows the fuel fed from the fuel supply nozzle to react with a part of the exhaust gas in the catalyst. The fuel is thus oxidized and combusted to generate heating gas. In the present embodiment, as shown in Fig. 1, the heating gas generation device 10 includes two catalysts provided in series so as to form two stages, that is, a front catalyst 11 and a rear catalyst 12. The fuel supply nozzle 13 injects and feeds fuel toward a front inlet portion of the front catalyst 11, the foremost catalyst. The supplied fuel F is shown by a phantom line. Alternatively, the number of catalysts may be one or at least three. Each of the catalysts 11 and 12 is formed of an oxidation catalyst that allows hydrocarbon HC contained in the supplied fuel to react with oxygen O₂ for oxidation. Each of the catalysts 11 and 12 is obtained by, for example, forming a coat material on a surface of a carriage formed of cordierite or the like and distributively arranging, on the coat material, a large number of rare metal particulates such as Pt which form active spots. However, any catalyst may be used for the heating gas generation device 10 provided that the catalyst has an oxidation function. For example, a ternary catalyst may be used.

The catalysts 11 and 12 are each shaped like a cylinder with a given diameter and include metal casings 11A and 12A, respectively. The catalysts 11 and 12 are arranged in the exhaust passage 1 at a predetermined distance L from each other. The catalysts 11 and 12 are arranged coaxially with each other and with the exhaust passage 1. The catalysts 11 and 12 are suspended in the exhaust passage 1 by support members (not shown in the drawings). Each of the catalysts 11 and 12 includes a large number of cells extending in the axial direction thereof so that gas can flow through the cells. Each of the catalysts 11 and 12 is of what is called a flow through type in which gas passes independently through each of the cells or what is called a wall flow type in which the front and rear ends of each of the cells are alternately closed so that gas introduced into one cell is discharged from the adjacent cell through a partition wall (formed of, for example, porous ceramic) between the cells.

In the present embodiment, the outer diameter D2 of the rear catalyst 12 is set larger than the outer diameter D1 of the front catalyst 11. Each of the outer diameters D1 and D2 is set smaller than the inner diameter d of the exhaust passage 1. Hence, the rear catalyst 12 is larger than the front catalyst 11 in cross sectional area, and each of the catalysts 11 and 12 is smaller than the exhaust passage 1 in cross sectional area. The catalysts 11 and 12 thus occupy a part of the cross-sectional area of the exhaust passage 1. Thus, a part of the exhaust gas flowing through the exhaust passage 1 is introduced into the front catalyst 11. A part of the exhaust gas having filed to be introduced into the catalyst 11 is introduced into the rear catalyst 12.

The part of the exhaust gas flowing through the exhaust passage 1 which is introduced into the front catalyst 11 is hereinafter referred to as the first part. The part of the exhaust gas which is introduced into the rear catalyst 12 is hereinafter referred to as the second part. Furthermore, the heating gas discharged from the front catalyst 11 is hereinafter referred to as the first heating gas. The heating gas discharged from the rear catalyst 12 is hereinafter referred to as the second heating gas or simply the heating gas. On the other hand, a main passage 14 with an annular cross section is formed outside the front catalyst 11 and the rear catalyst 12 in a radial direction; a part of the exhaust gas which has failed to be introduced into both the catalysts 11 and 12 (this part of the exhaust gas is hereinafter referred to as the remaining part) flows through the main passage 14.

An introduction passage 15 is provided through which the part of the exhaust gas having failed to be introduced into the front catalyst 11 is introduced into the rear catalyst 12. In the present embodiment, the introduction path 15 is defined by a tubular member 16 extending forward from the casing 12A of the rear catalyst 12 to cover an outer peripheral portion of the front catalyst 11. That is, the annular space formed between the tubular member 16 and the front catalyst 11 corresponds to the introduction path 15. The tubular member 16 is connected to the casing 12A at a rear end thereof and tapered so that the diameter thereof decreases forward. Thus, the cross-sectional area of the introduction path 15 increases rearward, that is, the cross-sectional area increases downstream. This configuration enables a reduction in passage resistance in the main passage 14 and the introduction path 15. The front end of the tubular member 16 is positioned slightly behind the front end of the front catalyst 11 so that the tubular member 16 covers at least the rear half of the front catalyst 11.

The configuration for the multistage can be varied in many ways. For example, the front catalyst 11 and the rear catalyst 12 need not be coaxial with the exhaust passage 1 or parallel to the exhaust passage 1. The front catalyst 11 and the rear catalyst 12 need not be coaxial with each other but may be offset from each other or inclined to each other. The tubular member 16 may have a constant inner diameter or the introduction path 15 may have a constant cross-sectional area. Furthermore, the tubular member 16 may be reversely tapered so that the front end thereof has a larger diameter than the rear end thereof. Each of the front catalyst 11 and the front catalyst 12 need not have a circular cross-sectional shape but may have any other cross-sectional shape such as an ellipse, a semicircle, or a polygon.

The fuel supply nozzle 13 is fixedly supported by the exhaust pipe 2 and injects the fuel F from the upstream side of the front catalyst 11, the foremost catalyst, toward a front end surface 11F or an inlet surface of the front catalyst 11. As the fuel, light oil, which is fuel for engines, is used but fuel other than that for engines may be used. The fuel supply nozzle 13 may be configured to feed the fuel into the front catalyst 11. The fuel supply nozzle 13 is controlled by the ECU described above.

A heater 17 is provided in the inlet portion of the front catalyst 11. The heater 17 is electrically driven and arranged immediately before the front end surface 11F of the front catalyst 11. A heating portion 17A at a leading end of the heater 17 is positioned close to the center of the front end surface 11F. The heating portion 17A of the heater 17 may be arranged inside the front catalyst 11 so that the front catalyst 11 can be directly heated. The heater 17 is also controlled by the ECU. The provision of the heater 17 allows the fuel fed from the fuel supply nozzle 13 to be directly and forcibly combusted. The combusted gas is introduced into the front catalyst 11 to allow activation of the front catalyst 11 and the rear catalyst 12 to be promoted.

Furthermore, a distribution member 20 is provided between the front catalyst 11 and the rear catalyst 12 adjacent to each other to distribute the first heating gas discharger from the front catalyst 11. The distribution member 20 is formed of a tubular member, particularly a cylindrical member 21. The cylindrical member 21 has the same outer diameter and inner diameter as those of the casing 11A of the front catalyst 11. The cylindrical member 21 is arranged coaxially with the front catalyst 11. A front end of the cylindrical member 21 is open and is connected to the rear end of the casing 11A of the front catalyst 11. Thus, the cylindrical member 21 is installed so as to project rearward from the front catalyst 11. A rear end of the cylindrical member 21 is closed by a closure plate 22 located opposite a rear end surface 11R of the front catalyst 11.

A plurality of holes 24 are formed in a peripheral side surface portion 23 extending between the front end and rear end of the cylindrical member 21 in an axial direction thereof. The first heating gas discharged from the front catalyst 11 into the cylindrical member 21 is discharged through the holes 24 in a plurality of radial directions. On the other hand, no hole is formed in the closure plate 22 of the cylindrical member 21. Thus, the closure plate 22 forms a baffle plate on which the first heating gas discharged from the front catalyst 11 impinges to change in direction.

Furthermore, a storage chamber 30 is provided immediately after an outlet portion of a rear end surface of the rear catalyst 12 so that the heating gas discharged from the rear catalyst 12 is temporarily stored in the storage chamber 30 and then discharged. The storage chamber 30 is defined by a defining member 31. The defining member 31 is a tubular or cylindrical member similar to the cylindrical member 21. The defining member 31 has the same outer diameter and inner diameter as those of the casing 12A of the rear catalyst 12 and is arranged coaxially with the rear catalyst 12. A front end of the defining member 31 is open and is connected to the rear end of the casing 12A of the rear catalyst 12. Thus, the defining member 31 is installed so as to project rearward from the rear catalyst 12. A rear end of the defining member 31 is closed by a closure plate 32 located opposite a rear end surface 12R of the rear catalyst 12.

A plurality of outlets 34 formed of holes are formed in a peripheral side surface portion 33 extending between the front end and rear end of the defining member 31 in an axial direction thereof. Furthermore, a plurality of outlets 35 formed of holes are formed in the closure plate 32 of the defining member 31. The outlets 34 in the peripheral side surface portion 33 are arranged around the axis of the defining member 31 in a staggered manner. The outlets 35 in the closure plate 32 are arranged in the closure plate 32 in a staggered manner. The second heating gas discharged from the rear catalyst 12 into the storage chamber 30 is discharged through the outlets 34 and 35, in a plurality of radial directions and also in an axial direction at a plurality of different positions. That is, the hot second heating gas flowing out rearward from the rear catalyst 12 in the axial direction is temporarily stored in the storage chamber 30. The hot second heating gas is then discharged from the outlets 34 and 35 and distributed so that the direction of flow changes into a plurality of directions.

Furthermore, the defining member 31 functions as a heat storage member in which heat received from the second heating gas is stored. The defining member 31 is formed of, for example, heat resistant metal (for example, a stainless steel plate) with a predetermined thickness so that the heat received from the second heating gas can be stored. In the present embodiment, the front end of the defining member 31 is connected and attached to the metal casing 12A of the rear catalyst 12. Consequently, heat transmitted from the casing 12A is also stored in the defining member 31. Thus, not only the storage chamber 30 is kept hot by the second heating gas but also the defining member 31 itself is kept hot by the heat storage function to promote maintenance of the storage chamber 30 at high temperatures.

On the other hand, the storage chamber 30 is supplied with an aqueous solution of urea N from the aqueous-solution-of-urea supply nozzle 4. A through-hole 36 is formed in the defining member 31 to allow passage of the aqueous solution of urea N fed from the outside of the storage chamber 30 through the aqueous-solution-of-urea supply nozzle 4. The aqueous-solution-of-urea supply nozzle 4 is directed so that the aqueous solution of urea N fed from the aqueous-solution-of-urea supply nozzle 4 impinges on the defining member 31 in the storage chamber 30. In the present embodiment, the aqueous-solution-of-urea supply nozzle 4 is directed so that a part of the aqueous solution of urea N impinges on the closure plate 32 of the defining member 31. The aqueous-solution-of-urea supply nozzle 4 injects the aqueous solution of urea N slightly obliquely rearward with respect to the vertical direction. On the other hand, the aqueous-solution-of-urea supply nozzle 4 is directed so as to prevent, wherever possible, the aqueous solution of urea N from coming into contact with or impinging on the rear end surface 12R of the rear catalyst 12. This configuration allows the aqueous-solution-of-urea supply nozzle 4 to feed the aqueous solution of urea N to a position between the rear catalyst 12 and the NOx catalyst 3.

Now, the advantages and effects of the present embodiment will be described. FIG. 2 shows the flow of gas by arrows. When the heating gas generation device 10 is actuated, the fuel F is fed from the fuel supply nozzle 13 while the engine is operative with exhaust gas flowing through the exhaust passage 1. On the other hand, a first part G1 of the exhaust gas is introduced into the front catalyst 11. A second part G2 of the exhaust gas having flowed into the introduction path 15 is introduced into the rear catalyst 12. The heater 17 is simultaneously actuated when the front catalyst 11 and the rear catalyst 12 are insufficiently activated, for example, when the engine is cold-started.

In the front catalyst 11, oxygen contained in the first part G1 of the exhaust gas reacts with the fuel F to oxidize or combust the fuel F. In particular, only a part of the exhaust gas is introduced into the front catalyst 1, and thus the gas flows slowly in the front catalyst 11, resulting in a sufficient reaction time. Hence, the first part of the exhaust gas becomes hot first heating gas, which is then discharged from the front catalyst 11. If the heater 17 has been actuated, at least a part of the fuel F is directly oxidized and combusted. This promotes the oxidation reaction of the fuel in the front catalyst 11 and the activation of the front catalyst 11.

The first heating gas discharged from the front catalyst 11 may contain a part of the fuel which has not been oxidized yet, particularly HC. If the first heating gas is supplied to the downstream NOx catalyst 3 without any change, then for example, the NOx catalyst 3 is disadvantageously poisoned with HC. Thus, HC is removed by supplying the first heating gas to the rear catalyst 12 so that the first heating gas reacts with the second part G2 to oxidize or combust the HC in the first heating gas again. As is the case with the front catalyst 11, only the second part G2 of the exhaust gas and the first heating gas are introduced into the rear catalyst 12. Hence, the gas flows slowly in the rear catalyst 12, resulting in a sufficient reaction time.

Thus, the second heating gas discharged from the rear catalyst 12, that is, the heating gas discharged from the heating gas generation device 10, does not contain a sufficient amount of HC to affect the catalytic capacity of the NOx catalyst 3 but is hot enough to heat the NOx catalyst 3. The oxidation reaction in the rear catalyst 12 also allows retention of the first heating gas at an appropriate temperature and preferably reheating of the first heating gas. Hence, the rear catalyst 12 provides the second heating gas, which is significantly higher, in temperature, than the remaining part G3 of the exhaust gas having passed through the main passage 14.

The second heating gas thus discharged from the rear catalyst 12 is fed to the NOx catalyst 3, which is hence heated.

As described above, the present embodiment allows efficient generation of heating gas that can be utilized to heat the NOx catalyst 3, which is an exhaust gas purification catalyst. This ensures that the NOx catalyst 3 can be activated early after the engine is started and can then be kept active after the activation.

Furthermore, when the front catalyst 11 and the rear catalyst 12 are insufficiently activated, the heater 17 is actuated to heat the first part of the exhaust gas and the front catalyst 11. This enables the front catalyst 11 and the rear catalyst 12 to be activated early and thus allows the NOx catalyst 3 to be activated early. Additionally, even if the front catalyst 11 and the rear catalyst 12 become inactive after activation because of a decrease in temperature or for any other reason, the front catalyst 11 and the rear catalyst 12 can be quickly activated again by actuating the heater 17.

The following advantages and effects are obtained by providing the distribution member 20 described above. That is, assuming that the distribution member 20 is not provided in the apparatus, the first heating gas (which is relatively rich and hot) discharged from the front catalyst 11 tends to travel linearly rearward in the axial direction and flow into the rear catalyst 12. Since the rear catalyst 12 is larger than the front catalyst 11 in diameter, the first heating gas tends to flow only into a central side of the rear catalyst 12, in other words, a portion of the rear catalyst 12 which is positioned immediately behind the front catalyst 11. On the other hand, the second part G2 (which is lean and cool) of the exhaust gas having passed through the introduction path 15 tends to be introduced into an outer peripheral side of the rear catalyst 12, in other words, a portion of the rear catalyst 12 which is positioned immediately behind the introduction path 15. Thus, the first heating gas and the second part G2 of the exhaust gas are introduced into the respective different sites. Oxygen is short on the central side of the rear catalyst 12, whereas insufficient temperature and fuel shortage occur on the outer peripheral side of the rear catalyst 12. As a result, efficient generation of heating gas is difficult.

However, when the distribution member 20 is provided as in the present embodiment, the first heating gas discharged from the front catalyst 11 can be distributed by the distribution member 20. The first heating gas can thus be mixed with the second part G2 of the exhaust gas, with the mixture fed evenly to the rear catalyst 12. Specifically, the first heating gas flowing in the axial direction from the front catalyst 11 impinges on the closure plate 22, serving as a baffle plate, to change in flow direction (see reference numeral (a) in Fig. 2). The first heating gas then flows out from the plurality of holes 24 in the peripheral side surface portion 23 in the respective radial directions (see reference numeral (b) in FIG. 2). Then, the first heating gas mixes with the second part G2 of the exhaust gas having flowed through the introduction path 15. The resultant mixed gas also flows to a gap located behind the closure plate 22 and between the closure plate 22 and the rear catalyst 12 and thus flows evenly into the rear catalyst 12.

Thus, the provision of the distribution member 20 allows the mixture of the first heating gas discharged from the front catalyst 11 with the second part of the newly introduced exhaust gas. Consequently, oxygen concentration, fuel concentration, and temperature can be restrained from varying with the site of the rear catalyst 12, thus allowing heating gas to be efficiently generated.

In particular, the distance L between the front catalyst 11 and the rear catalyst 12 may be reduced in order to allow the front and rear catalysts 11 and 12 to be easily mounted and to decrease a heat loss. However, assuming that the distribution member 20 is not provided in the apparatus, the first heating gas more significantly tends to flow only into a portion of the rear catalyst 12 which is positioned immediately behind the front catalyst 11. However, even if the distance between the catalysts is short, the provision of the distribution member 20 serves to prevent the above-described partial inflow, allowing the mixed gas to flow evenly into the rear catalyst 12.

Now, the advantages and effects regarding the storage chamber 30 will be described. The second heating gas discharged from the rear catalyst 12 is temporarily stored in the storage chamber 30, and then discharged from the outlets 34 and 35. Hence, the inside of the storage chamber 30 is hot as a result of the heat of the second heating gas. Furthermore, both the heat received from the second heating gas and the heat transmitted from the casing 12A of the rear catalyst 12 are stored in the defining member 31. The heat and the high temperature state in the storage chamber 30 are suitably retained.

When the aqueous solution of urea N is supplied to the storage chamber 30, the heat in the storage chamber 30 promotes evaporation and hydrolyzation of the aqueous solution of urea N. This allows ammonia in gas form, that is, ammonia gas, to be efficiently generated. The ammonia gas is discharged from the plurality of outlets 34 and 35 so as to be distributed in various directions. After being discharged from the storage chamber 30, the ammonia gas and the second heating gas, which are gaseous matter, are diffused and introduced evenly into the NOx catalyst 3. This serves to improve the NOx purification capacity and heating effect of the NOx catalyst 3. Thus, the present embodiment can promote the evaporation and hydrolyzation of the aqueous solution of urea N and the generation of ammonia.

Assuming that the storage chamber 30 and the defining member 31 are not provided in the apparatus, the remaining part G3 of the exhaust gas having passed through the outer peripheral side of the rear catalyst 12 flows around to the outlet portion of the rear catalyst 12. The remaining part G3 then cools the second heating gas discharged from the rear catalyst 12. Hence, even with the aqueous solution of urea N supplied to the outlet portion of the rear catalyst 12, the effect of promoting the evaporation and hydrolyzation of the aqueous solution of urea N is reduced. On the other hand, when the storage chamber 30 and the defining member 31 are provided in the apparatus, the defining member 31 separates the storage chamber 30 from the outside. This enables the second heating gas to be restrained from being cooled by the remaining part G3 of the exhaust gas and allows mixture of these types of gas to be suppressed. Thus, the present embodiment can suppress the cooling of the second heating gas discharged from the rear catalyst 12 and efficiently utilize the heat of the gas to promote the evaporation and hydrolyzation of the aqueous solution of urea N.

Furthermore, as is the case with the distribution member 20, the second heating gas discharged from the rear catalyst 12 changes in flow direction so as to be discharged in various directions through the plurality of outlets 34 and 35. Moreover, the ammonia gas in the storage chamber 30 is discharged in various directions. Thus, these types of gas can be introduced evenly into the NOx catalyst 3 (that is, the gas can be fed evenly to the front end inlet surface of the NOx catalyst 3). This allows the purification capacity and heating effect of the NOx catalyst 3 to be improved.

In addition, the aqueous solution of urea N fed into the storage chamber 30 comes into contact with or impinge on the hot defining member 31, serving as a heat storage member. Thus, the heat of the defining member 31 itself can also be utilized to further promote the evaporation and hydrolyzation of the aqueous solution of urea N.

HC may be adsorbed in the rear catalyst 12, and reaction of urea with the adsorbed HC results in an undesired component such as NOx. Thus, to prevent this, the present embodiment precludes, wherever possible, the supplied aqueous solution of urea N from coming into contact with or impinge on the rear catalyst 12.

The aqueous solution of urea N may be continuously or intermittently fed from the aqueous-solution-of-urea supply nozzle 4. In either case, the aqueous solution of urea N evaporates in the storage chamber 30 and is discharged from the storage chamber 30 as ammonia gas.

The embodiment of the present invention has been described. However, the present invention may take other embodiments. For example, the present invention is applicable to internal combustion engines other than diesel engines, that is, compression ignited internal combustion engines. The present invention is applicable to, for example, spark ignited internal combustion engines, particularly direct-injection lean burn gasoline engines.

Other possible embodiments are as follows.
(1) All or a part (particularly the peripheral side surface portion 33) of the defining member may be formed of a metal net or punched metal. The optimum specific shape, structure, and the like of the defining member may be adopted in view of the results of tests and the like.
(2) Based on the same concept as that for the distribution member 21, the outlets 35 may be omitted from the closure plate 32 of the defining member 31 or provided exclusively on the outer peripheral side of the closure plate 32. This enables a positive change in the flow direction of the second heating gas discharged rearward from the rear catalyst 12 in the axial direction, while allowing the storage chamber 30 to be maintained at an appropriate temperature.
(3) The number of catalysts in the heating gas generation device is not limited to two, but more catalysts, for example, three or four catalysts, may be provided. For example, if two catalysts are provided and the second (rearmost) catalyst emits HC, which is undesirable, the number of catalysts may be increased to, for example, three so that the third catalyst removes HC components. In any case, the number of catalysts may be determined as required so as to prevent the rearmost catalyst from discharging HC.
(4) The fuel supply nozzle of the heating gas generation device is essential for the foremost catalyst, that is, the first catalyst. However, the fuel supply nozzle may be provided for the intermediate or rearmost catalyst.

## Claims

1. An exhaust purification apparatus for an internal combustion engine, comprising:
a heating gas generation device (10) configured to generate heating gas utilizing a part of exhaust gas flowing through an exhaust passage in the internal combustion engine, the heating gas generation device comprising a number of catalysts (11, 12) with an oxidation function and arranged in series so as to form multiple stages and a fuel supply nozzle (13) configured to supply fuel to the foremost catalyst (11) ; and
a selective reduction NOx catalyst (3) provided downstream of the heating gas generation device; wherein the exhaust purification apparatus further comprises:
an aqueous-solution-of-urea supply nozzle (4) configured to supply an aqueous solution of urea (N) to between the catalysts and the NOx catalyst;
a storage chamber (30) provided in an outlet portion of the rearmost catalyst (12) so that the heating gas discharged from the catalyst is temporarily stored in the storage chamber and then discharged, the storage chamber being supplied with the aqueous solution of urea from the aqueous-solution-of-urea supply nozzle and defined by a defining member (31) that is arranged coaxially with the rearmost catalyst, wherein a rear end of the defining member is closed by a closure plate (32) located opposite a rear end surface (12R) of the rearmost catalyst, and wherein the supply nozzle is directed so that the aqueous solution of urea impinges on the closure plate of the defining member; and
a distribution member (20) provided between the catalysts adjacent to each other in a front-rear direction to distribute gas discharged from the front catalyst.

2. The exhaust purification apparatus for the internal combustion engine according to claim 1, **characterized in that** the defining member comprises a plurality of outlets (34, 35) configured to discharge the gas in the storage chamber in a plurality of directions.

3. The exhaust purification apparatus for the internal combustion engine according to claim 1 or 2, **characterized in that** heat received from the heating gas is stored in the defining member.

4. The exhaust purification apparatus for the internal combustion engine according to any one of claims 1 to 3, **characterized in that** the defining member is connected to a casing (12A) of the rearmost catalyst so that heat transmitted from the casing is stored in the defining member.

5. The exhaust purification apparatus for the internal combustion engine according to any one of claims 1 to 4, **characterized in that** the aqueous-solution-of-urea supply nozzle is directed so that the aqueous solution of urea fed from the aqueous-solution-of-urea supply nozzle impinges on the defining member.

6. The exhaust purification apparatus for the internal combustion engine according to claim 1, **characterized in that** the defining member is formed of a cylindrical member projecting rearward from the rearmost catalyst and closed at a rear end thereof by the closure plate.

7. The exhaust purification apparatus for the internal combustion engine according to claim 1, **characterized by** further comprising a heater (17) provided in an inlet portion of the foremost catalyst (11).

8. The exhaust purification apparatus for the internal combustion engine according to claim 1, wherein a first part (G1) of the exhaust gas flowing through the exhaust gas passage is introduced into the front catalyst (11),
the heating gas generation device further comprises an introduction passage (15) through which a second part (G2) of the exhaust gas having failed to be introduced into the front catalyst is introduced rear catalyst (12);
a first heating gas discharged from the front catalyst is distributed by the distribution member to be mixed with the second part of the exhaust gas, the mixture being evenly fed to the rear catalyst; and wherein
a main passage (14), through which a remaining part (G3) of the exhaust gas having failed to be introduced into the catalysts (11, 12) flows, is formed inside the exhaust passage outside the catalysts (11, 12) in a radial direction.

## Patentansprüche

1. Abgasreinigungsvorrichtung für eine Verbrennungskraftmaschine, aufweisend:
eine Aufwärmgaserzeugungsvorrichtung (10), die so konfiguriert ist, dass sie unter Verwendung eines Teils des durch einen Abgasstrang in der Verbrennungskraftmaschine strömenden Abgases Aufwärmgas erzeugt, wobei die Aufwärmgaserzeugungsvorrichtung eine Anzahl von Katalysatoren (11, 12) mit einer Oxidierungsfunktion aufweist, die derart in Reihe angeordnet sind, dass sie mehrere Stufen bilden, und eine Kraftstoffzuführdüse (13), die so konfiguriert ist,
dass Kraftstoff dem vordersten Katalysator (11) zugeführt wird; und
einen Selektivreduktions-NOx-Katalysator (3), der sich stromabwärts von der Aufwärmgaserzeugungsvorrichtung befindet; wobei die Abgasreinigungsvorrichtung ferner aufweist:
eine Zuführdüse für eine wässrige Urealösung (4), die so konfiguriert ist, dass sie eine wässrige Urealösung (N) zwischen den Katalysatoren und dem NOx-Katalysator zur Verfügung stellt;
eine Lagerkammer (30), die sich in einem Auslassabschnitt des hintersten Katalysators (12) befindet, so dass das von dem Katalysator ausgestoßene Aufwärmgas temporär in der Lagerkammer gelagert und dann ausgestoßen wird,
wobei der Lagerkammer die wässrige Urealösung von der Zuführdüse für die wässrige Urealösung zugeführt wird und von einem Abgrenzungselement (31) abgegrenzt wird, das koaxial zu dem hintersten Katalysator angeordnet ist, wobei ein hinteres Ende des Abgrenzungselements von einer Schließplatte (32), die sich gegenüber einer hinteren Endfläche (12R) des hintersten Katalysators befindet,
geschlossen wird, und wobei die Zuführdüse so ausgerichtet wird, dass die wässrige Urealösung auf der Schließplatte des Abgrenzungselements aufschlägt;
und
ein Verteilungselement (20), das sich zwischen den Katalysatoren befindet, die nebeneinander in einer vorne-hinten-Richtung angeordnet sind, um von dem vorderen Katalysator ausgestoßenes Gas zu verteilen.

2. Abgasreinigungsvorrichtung für die Verbrennungskraftmaschine nach Anspruch 1, **dadurch gekennzeichnet, dass** das Abgrenzungselement eine Mehrzahl von Auslässen (34, 35) aufweist, die so konfiguriert sind, dass sie das Gas in der Lagerkammer in eine Mehrzahl von Richtungen ausstoßen.

3. Abgasreinigungsvorrichtung für die Verbrennungskraftmaschine nach Anspruch 1 oder 2, **dadurch gekennzeichnet, dass** die von dem Aufwärmgas empfangene Wärme in dem Abgrenzungselement gespeichert wird.

4. Abgasreinigungsvorrichtung für die Verbrennungskraftmaschine nach einem der Ansprüche 1 bis 3, **dadurch gekennzeichnet, dass** das Abgrenzungselement mit einem Gehäuse (12A) des hintersten Katalysators verbunden ist, so dass von dem Gehäuse übertragene Wärme in dem Abgrenzungselement gespeichert wird.

5. Abgasreinigungsvorrichtung für die Verbrennungskraftmaschine nach einem der Ansprüche 1 bis 4, **dadurch gekennzeichnet, dass** die Zuführdüse für die wässrige Urealösung so ausgerichtet wird, dass die von der Zuführdüse für die wässrige Urealösung zugeführte wässrige Urealösung auf dem Abgrenzungselement aufschlägt.

6. Abgasreinigungsvorrichtung für die Verbrennungskraftmaschine nach Anspruch 1, **dadurch gekennzeichnet, dass** das Abgrenzungselement aus einem zylindrischen Element besteht, das von dem hintersten Katalysator aus nach hinten ragt und an einem hinteren Ende desselben von der Schließplatte geschlossen wird.

7. Abgasreinigungsvorrichtung für die Verbrennungskraftmaschine nach Anspruch 1, **dadurch gekennzeichnet, dass** sie ferner eine Heizvorrichtung (17) aufweist, die sich in einem Einlassabschnitt des vordersten Katalysators (11) befindet.

8. Abgasreinigungsvorrichtung für die Verbrennungskraftmaschine nach Anspruch 1, wobei ein erster Teil (G1) des durch den Abgasstrang strömenden Abgases in den vorderen Katalysator (11) eingeleitet wird,
die Aufwärmgaserzeugungsvorrichtung ferner eine Einleitungsleitung (15) aufweist, durch die ein zweiter Teil (G2) des Abgases, der nicht in den vorderen Katalysator eingeleitet werden konnte, in den hinteren Katalysator (12) eingeleitet wird;
ein erstes von dem vorderen Katalysator ausgestoßenes Aufwärmgas durch das Verteilungselement verteilt wird, um mit dem zweiten Teil des Abgases vermengt zu werden, wobei die Mischung gleichmäßig dem hinteren Katalysator zugeführt wird; und wobei
eine Hauptleitung (14), durch die ein Restteil (G3) des Abgases, das nicht in die Katalysatoren (11, 12) eingeleitet werden konnte, strömt, in dem Abgasstrang außerhalb der Katalysatoren (11, 12) in einer radialen Richtung ausgebildet ist.

## Revendications

1. Appareil de purification de gaz d'échappement pour un moteur à combustion interne, comprenant :
un dispositif (10) de génération de gaz de chauffage configuré pour générer un gaz de chauffage en utilisant une partie du gaz d'échappement qui circule à travers un passage d'échappement dans le moteur à combustion interne, le dispositif de génération de gaz de chauffage comprenant un certain nombre de catalyseurs (11, 12) avec une fonction d'oxydation et agencés en série de manière à former de multiples étages et une buse d'alimentation en carburant (13) configurée pour fournir du carburant au premier catalyseur (11) ; et
un catalyseur de NOx (3) du type à réduction sélective prévu en aval du dispositif de génération de gaz de chauffage ; où l'appareil de purification de gaz d'échappement comprend en outre :
une buse d'alimentation (4) en solution aqueuse d'urée configurée pour fournir une solution aqueuse d'urée (N) entre les catalyseurs et le catalyseur de NOx ;
une chambre de stockage (30) prévue dans une partie de sortie du dernier catalyseur (12) de sorte que le gaz de chauffage déchargé du catalyseur soit stocké temporairement dans la chambre de stockage et ensuite déchargé, la chambre de stockage étant alimentée avec la solution aqueuse d'urée à partir de la buse d'alimentation en solution aqueuse d'urée et définie par un élément de définition (31) qui est agencé de manière coaxiale avec le dernier catalyseur, où une extrémité arrière de l'élément de définition est fermée par une plaque de fermeture (32) située en face d'une surface d'extrémité arrière (12R) du dernier catalyseur, et où la buse d'alimentation est dirigée de sorte que la solution aqueuse d'urée s'appuie sur la plaque de fermeture de l'élément de définition ; et
un élément de distribution (20) prévu entre les catalyseurs adjacents les uns aux autres dans une direction avant-arrière pour distribuer un gaz déchargé du catalyseur avant.

2. Appareil de purification de gaz d'échappement pour le moteur à combustion interne selon la revendication 1, **caractérisé en ce que** l'élément de définition comprend une pluralité de sorties (34, 35) configurées pour décharger le gaz dans la chambre de stockage dans une pluralité de directions.

3. Appareil de purification de gaz d'échappement pour le moteur à combustion interne selon la revendication 1 ou 2, **caractérisé en ce que** la chaleur reçue du gaz de chauffage est stockée dans l'élément de définition.

4. Appareil de purification de gaz d'échappement pour le moteur à combustion interne selon l'une quelconque des revendications 1 à 3, **caractérisé en ce que** l'élément de définition est relié à un boîtier (12A) du dernier catalyseur de sorte que la chaleur transmise à partir du boîtier soit stockée dans l'élément de définition.

5. Appareil de purification de gaz d'échappement pour le moteur à combustion interne selon l'une quelconque des revendications 1 à 4, **caractérisé en ce que** la buse d'alimentation en solution aqueuse durée est dirigée de sorte que la solution aqueuse d'urée alimentée à partir de la buse d'alimentation en solution aqueuse d'urée s'appuie sur l'élément de définition.

6. Appareil de purification de gaz d'échappement pour le moteur à combustion interne selon la revendication 1, **caractérisé en ce que** l'élément de définition est formé d'un élément cylindrique faisant saillie vers l'arrière à partir du dernier catalyseur et fermé au niveau d'une extrémité arrière de celui-ci par la plaque de fermeture.

7. Appareil de purification de gaz d'échappement pour le moteur à combustion interne selon la revendication 1, **caractérisé par** le fait de comprendre en outre un réchauffeur (17) prévu dans une partie d'entrée du premier catalyseur (11).

8. Appareil de purification de gaz d'échappement pour le moteur à combustion interne selon la revendication 1, dans lequel une première partie (G1) du gaz d'échappement qui circule à travers le passage de gaz d'échappement est introduite dans le catalyseur avant (11),
le dispositif de génération de gaz de chauffage comprend en outre un passage d'introduction (15) à travers lequel une deuxième partie (G2) du gaz d'échappement n'ayant pas réussi à être introduite dans le catalyseur avant est introduite dans le catalyseur arrière (12) ;
un premier gaz de chauffage déchargé du catalyseur avant est distribué par l'élément de distribution pour être mélangé avec la deuxième partie du gaz d'échappement, le mélange étant uniformément alimenté au catalyseur arrière ; et dans lequel
un passage principal (14), à travers lequel une partie restante (G3) du gaz d'échappement n'ayant pas réussi à être introduite dans le catalyseur (11, 12) s'écoule, est formé à l'intérieur du passage d'échappement à l'extérieur des catalyseurs (11, 12) dans une direction radiale.
